# FASCICULE DE BREVET EUROPEEN

(11) **EP 1 259 087 B1**
(45) Date de publication et mention de la délivrance du brevet: **16.09.2009**
(21) Numéro de dépôt: 02291032.7
(22) Date de dépôt: 22.04.2002
(51) Int. Cl.: H04B 7/005

(54) **Sélection de puissance d'émission dans un radiotéléphone**
Selektion einer Sendeleistung in einem Funkgerät
Selection of transmitting power in a radiotelephone

(30) Priorité: 17.05.2001 FR 0106627
(43) Date de publication de la demande: 20.11.2002
(73) Titulaire: Sagem Mobiles, 75015 Paris (FR)
(72) Inventeur: Chambon, François, 75017 Paris (FR); Sevens, André, 95320 Saint Leu La Forêt (FR)
(74) Mandataire: Bloch & Bonnétat

(56) Documents cités:
- EP-A- 0 525 962
- US-A- 4 636 741
- US-A- 5 036 532

## Description

La présente invention concerne en général une sélection de puissance dans un radiotéléphone portable au regard des effets du rayonnement électromagnétique émis par le radiotéléphone sur le corps humain.

Actuellement, un radiotéléphone ne peut fonctionner que dans une classe de puissance d'émission prédéterminée lors de la construction du radiotéléphone.

Lorsque la classe correspond à des puissances d'émission relativement élevées, la puissance d'émission ne peut pas être réduite dans l'intervalle de variation de puissance d'une classe de puissance plus faible. Par exemple, lorsque l'usager souhaite utiliser le radiotéléphone en combiné, en l'appliquant contre sa tête, l'usager subit les effets d'une puissance d'émission élevée, alors qu'il est localisé dans une zone où le réseau de radiotéléphonie auquel il est rattaché, ne nécessite qu'une faible puissance d'émission. De même, lorsque l'usager souhaite utiliser le radiotéléphone en mains libres dans cette zone nécessitant une puissance d'émission faible, la batterie du radiotéléphone consommera inutilement de l'énergie électrique.

L'objectif de l'invention est d'adapter la puissance d'émission d'un radiotéléphone en fonction de l'utilisation du radiotéléphone afin notamment de diminuer les effets de rayonnement électromagnétique et la consommation électrique du radiotéléphone.

Pour atteindre cet objectif, un procédé de sélection de puissance d'émission dans un radiotéléphone susceptible de fonctionner dans au moins une deuxième classe de puissance plus élevée qu'une première classe de faible puissance dans un réseau de radiotéléphonie, est **caractérisé en ce qu**'il comprend les étapes de :
sélectionner l'une des première et deuxième classes de puissance en fonction de l'une parmi au moins deux configurations d'utilisation du radiotéléphone indépendamment de tout changement de batterie du radiotéléphone, et
faire fonctionner le radiotéléphone dans la classe de puissance sélectionnée dès que le radiotéléphone n'est pas en communication.

Les configurations d'utilisation du radiotéléphone selon l'invention sont indépendantes d'un quelconque changement de batterie du radiotéléphone comparativement aux brevets US 5 036 532 et US 4 636 741. Elles dépendent particulièrement de configurations de moyens audio liés au radiotéléphone. Tant que la configuration d'utilisation n'est pas modifiée, la puissance d'émission varie dynamiquement dans la classe sélectionnée.

Afin que le réseau de radiotéléphonie auquel le radiotéléphone est connecté, puisse à nouveau contrôler dynamiquement la puissance d'émission dans la classe sélectionnée, le procédé comprend une notification du changement dynamique de classe de puissance au réseau, ou à défaut une connexion-déconnexion du radiotéléphone avec le réseau et une notification de la classe de puissance sélectionnée par le radiotéléphone à un moyen de contrôle de puissance dans le réseau de radiotéléphonie, avant de fonctionner dans la classe de puissance sélectionnée.

Typiquement, la première classe de puissance est sélectionnée pour une utilisation du radiotéléphone en combiné, et la deuxième classe de puissance est sélectionnée pour une utilisation du radiotéléphone en mains libres.

Lorsque le radiotéléphone est susceptible de fonctionner dans une troisième classe de puissance plus élevée que les première et deuxième classes, l'étape de sélectionner consiste à sélectionner la première classe de puissance lorsque le radiotéléphone est utilisé en combiné, la deuxième classe de puissance lorsque le radiotéléphone est utilisé en mains libres avec un haut-parleur à écoute amplifiée intégré dans le radiotéléphone ou bien avec un adaptateur pour piéton branché au radiotéléphone et muni d'un microphone et un haut-parleur, et la troisième classe de puissance lorsque le radiotéléphone est utilisé en mains libres avec un adaptateur notamment pour véhicule, doté d'un microphone, d'un haut-parleur et d'une antenne.

De préférence, l'usager peut choisir manuellement entre un mode manuel de sélection de classe de puissance et un mode automatique de sélection de classe de puissance.

L'invention concerne également un radiotéléphone pour la mise en oeuvre du procédé conforme à l'invention, susceptible de fonctionner dans au moins une deuxième classe de puissance plus élevée qu'une première classe de faible puissance dans un réseau de radiotéléphonie. Le radiotéléphone est **caractérisé en ce qu**'il comprend un moyen pour commander un fonctionnement du radiotéléphone sélectivement dans l'une de plusieurs classes de puissance d'émission en fonction respectivement de plusieurs configurations d'utilisation du radiotéléphone indépendamment de tout changement de batterie du radiotéléphone, dès que le radiotéléphone n'est pas en communication.

Le moyen pour commander peut commander alors le fonctionnement du radiotéléphone dans une première classe de faible puissance en réponse à un signal d'un moyen dans le radiotéléphone indiquant une utilisation en combiné, et dans une deuxième classe de puissance plus élevée en réponse à un signal transmis à travers une prise extérieure du radiotéléphone par un adaptateur doté au moins d'un microphone et d'un haut-parleur pour une utilisation en mains libres. Le moyen pour commander peut aussi commander le fonctionnement du radiotéléphone dans une troisième classe de puissance plus élevée que les première et deuxième classes en réponse à un signal transmis à travers la prise extérieure par un adaptateur doté d'un microphone, d'un haut-parleur et d'une antenne pour une utilisation en mains libres notamment dans un véhicule.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un radiotéléphone portable avec un adaptateur mains libres, dans le contexte d'un réseau de téléphonie connu ;
- la figure 2 est un algorithme d'un procédé de sélection manuelle de puissance d'émission selon l'invention ; et
- la figure 3 est un algorithme d'un procédé de sélection automatique et/ou manuelle de puissance d'émission selon l'invention.

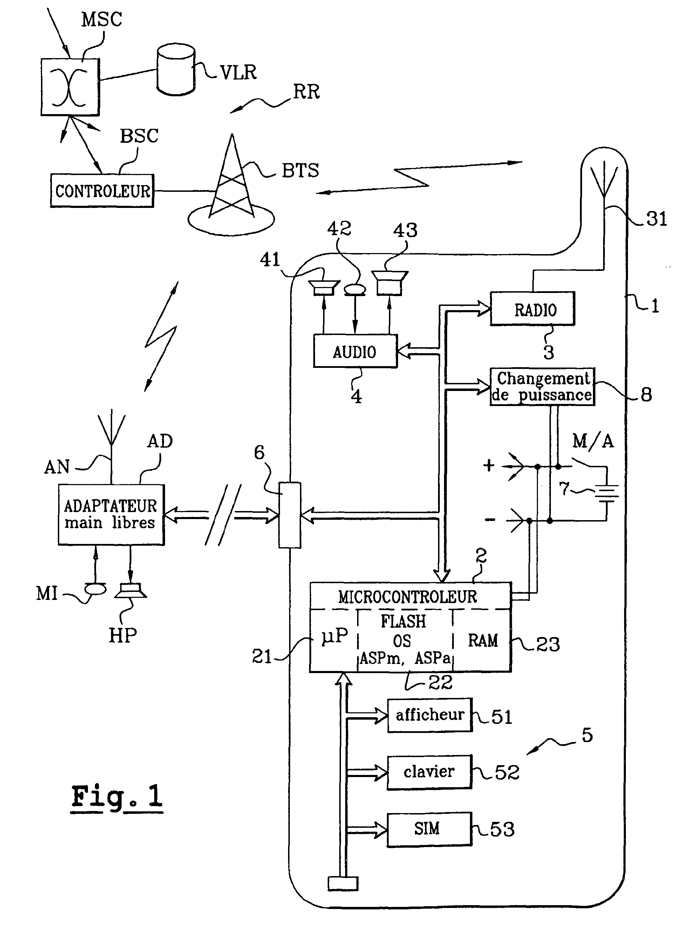

Un radiotéléphone mobile portable 1 comme montré schématiquement à la figure 1 comprend principalement un microcontrôleur 2, une interface radio 3, une interface audio 4 et des périphériques 5. Le microcontrôleur 2 comprend classiquement un microprocesseur 21, une mémoire non volatile 22 du type FLASH incluant notamment un système d'exploitation OS, des algorithmes de communication et particulièrement un algorithme de sélection de puissance d'émission ASPm, ASPa selon l'invention, et une mémoire de données RAM 23.

L'interface radio 3 est reliée à une antenne 31 du radiotéléphone et comprend principalement un duplexeur de voies de transmission et réception, des circuits de transposition de fréquence, un modulateur et un démolulateur, des convertisseurs analogique-numérique et numérique-analogique et un circuit de codage-décodage de canal. Comme montré schématiquement également à la figure 1, l'antenne 31 communique avec le sous-réseau fixe d'un réseau de radiotéléphonie cellulaire numérique RR. Le sous-réseau fixe est représenté schématiquement à la figure 1 par une zone de localisation où se trouve le radiotéléphone 1, comprenant une station radio de base BTS reliée à un commutateur du service mobile MSC à travers un contrôleur de station de base BSC.

En particulier, en ce qui concerne le contrôle dynamique de la puissance d'émission du radiotéléphone en tant que station mobile, le microcontrôleur 2 mesure périodiquement à travers l'interface radio 3 le champ radioélectrique reçu sur des porteuses prédéterminées suivant le sens descendant de la station de base BTS vers le radiotéléphone 1 et communique les résultats de ces mesures par voie radio à la station de base, et la station de base BTS mesure le champ radioélectrique reçu provenant du radiotéléphone 1 de manière à communiquer toutes ces mesures au contrôleur BSC qui gère la ressource radio entre le sous-réseau fixe et le radiotéléphone 1. En fonction de ces mesures, le contrôleur BSC avec le commutateur MSC réduit et augmente dynamiquement la puissance d'émission du radiotéléphone typiquement par pas de 2 dB, de manière à assurer une bonne qualité de transmission de la liaison montante, tout en atténuant les interférences avec les radiotéléphones voisins, et décide également de transférer le radiotéléphone d'une cellule vers une autre tout en lui communiquant un niveau de puissance d'émission.

L'interface audio 4 code et décode des signaux de parole en bande de base échangés avec l'interface radio 3 de manière respectivement à les reproduire vers un écouteur 41 et les capter par un microphone 42 lorsque le radiotéléphone est utilisé normalement en combiné téléphonique. De préférence, lorsque le radiotéléphone est utilisé en mains libres à la suite de la sollicitation d'une touche particulière ou d'un autre moyen électromécanique analogue, l'interface audio 4, sous la commande du microcontrôleur 2, substitue l'écouteur 41 à un haut-parleur à écoute amplifiée 43.

Le microprocesseur 21 est également relié aux périphériques 5 qui sont notamment un afficheur à cristaux liquides 51, un clavier 52, un module d'identité d'abonné amovible SIM 53, etc.

En variante, le radiotéléphone peut également comprendre un circuit de reconnaissance vocale qui permet à l'usager de transmettre des commandes vocales à la place de commande par touches.

Le radiotéléphone 1 comprend encore une prise normalisée extérieure 6 qui est reliée à l'interface radio 3, l'interface audio 4, le microcontrôleur 2 et un circuit de changement de puissance 8 selon l'invention, ainsi qu'à une batterie amovible 7 alimentant les divers circuits du radiotéléphone. Comme on le verra ci-après, la puissance d'émission dépend de la classe de puissance à laquelle le radiotéléphone appartient et est indépendante de tout changement de la batterie 7 ou substitution de celle-ci à une batterie externe.

La prise extérieure 6 sert à relier le radiotéléphone 1 notamment à un adaptateur mains libres AD pour piéton ou pour véhicule notamment automobile. Lorsque l'adaptateur appartient à un kit mains libres pour piéton, il relie au moins un petit microphone MI et un haut-parleur HP à l'interface audio 4. Lorsque l'adaptateur AD est inclus dans un kit mains libres pour véhicule, il relie une antenne AN sur le véhicule, un microphone MI et un haut-parleur HP installés dans le véhicule à l'interface radio 3 et à l'interface audio 4 à travers la prise 6, et augmente la puissance d'émission du radiotéléphone. L'adaptateur AD dès qu'il est branché à la prise 6 signale sa présence au microcontrôleur 2.

A titre d'exemple, il est supposé dans la suite que le radiotéléphone 1 est conçu pour communiquer dans un réseau de radiotéléphonie RR du type GSM 900 et est capable de rayonner une puissance maximale d'émission qui est définie par une puissance maximale nominale et un intervalle de variation pour chacune de trois classes de numéro 3, 4 et 5 correspondant à des radiotéléphones portatifs les plus employés actuellement :

| Classe de puissance | Puissance nominale (W) | Variation (W) |
|---|---|---|
| C3 | 5 | [3,2 ; 7,9] |
| C4 | 2 | [1,3 ; 3,2] |
| C5 | 0,8 | [0,5 ; 1,3] |

En variante, l'invention n'est pas limitée à ces valeurs numériques, et elle peut se référer à d'autres classes de puissance, par exemple aux classes de puissance d'émission 1, 2 et 3 relatives à un radiotéléphone selon la norme DCS 1800, correspondant aux puissances maximales nominales respectives de 1 ; 0,25 et 4 W et peut combiner plusieurs types pour un radiotéléphone multibande.

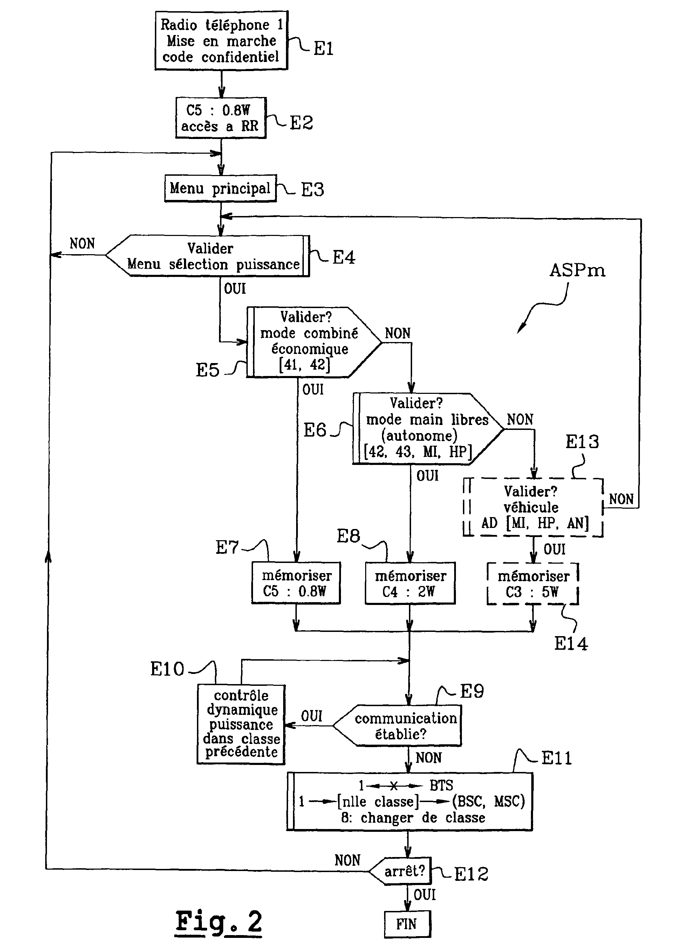

L'algorithme de sélection de puissance ASPm, lorsqu'il est manuel, comprend essentiellement des étapes E1 à E12 comme montrées à la figure 2.

Il est supposé tout d'abord que le radiotéléphone 1 a une puissance maximale correspondant à la classe C4 et est donc capable de fonctionner en classes C4 et C5.

Initialement à l'étape E1, le radiotéléphone 1 est mise en marche de manière classique, en appuyant sur un bouton marche/arrêt M/A ce qui met sous tension les composants inclus dans le radiotéléphone et ce qui invite l'usager à s'authentifier dans le module SIM 53, par exemple en composant un code confidentiel au clavier 52. Puis après authentification, le circuit 8 cale la puissance d'émission de l'interface radio 3 dans la classe de puissance économique C5 correspondant à une puissance maximale nominale de 0,8 W à l'étape E2. Avec cette puissance, le radiotéléphone recherche un accès au réseau de radiotéléphonie RR.

Le microcontrôleur 2 commande l'affichage d'un menu principal dans l'afficheur 51 à l'étape E3. Ce menu principal offre notamment une "sélection de puissance" selon l'invention que peut valider l'usager du radiotéléphone à l'étape E4, en utilisant classiquement une touche de défilement et une touche de validation dans le clavier 52.

Le menu de sélection de classe de puissance d'émission présente deux options.

La première option concerne la sélection de la classe de puissance C5 à l'étape E5. Dans le cas où le radiotéléphone fonctionne déjà dans l'autre classe C4, l'usager valide la classe C5 par exemple pour une consommation économique et surtout lorsqu'il souhaite utiliser le radiotéléphone simplement en combiné au moyen de l'écouteur 41 et du microphone 42, afin de réduire la puissance rayonnée par le radiotéléphone au niveau de la tête de l'usager. La mémoire 22 du microcontrôleur 2 mémorise alors un identificateur de la nouvelle classe de puissance sélectionnée C5 à l'étape E7 tant que le changement de classe n'est pas acquitté par le réseau RR, comme on le verra aux étapes suivantes E9, E10 et E11.

Dans le menu de sélection de puissance, lorsque l'usager valide la deuxième option relative à la classe C4 à l'étape E6, soit juste après la mise en marche du radiotéléphone, soit après une utilisation de celui-ci en classe C5, l'usager recherche une couverture radioélectrique maximale afin que le radiotéléphone accède au réseau RR au cas où celui-ci est relativement éloigné de la station BTS et/ou souhaite utiliser son radiotéléphone en mains libres, c'est-à-dire d'une manière éloignée de sa tête afin de ne pas être relativement perturbé par la puissance rayonnante plus élevée émise par le radiotéléphone. L'étape E6 est donc sélectionnée notamment lorsque le radiotéléphone 1 doit être utilisé en mains libres avec le haut-parleur à écoute amplifiée 43 et le microphone 42 lorsque le radiotéléphone est par exemple posé sur un support tel qu'une table, ou lorsque le radiotéléphone 1 est branché par la prise 6 à l'adaptateur AD pour un usage en piéton avec le haut-parleur HP et le microphone MI, ou pour un usage dans un véhicule avec le haut-parleur HP, le microphone MI et l'antenne AN. Après la validation à l'étape E6, la mémoire 22 du microcontrôleur 2 mémorise un identificateur de la nouvelle classe de puissance sélectionnée C4 à l'étape E8.

Après l'étape E7 ou E8, le microcontrôleur 2 vérifie à l'étape E9 qu'aucune communication avec un usager éloigné à travers un canal de trafic a déjà été établie, c'est-à-dire qu'aucun canal de trafic n'est occupé par le radiotéléphone 1. Si une communication est en cours, le contrôle dynamique de la puissance émise par le radiotéléphone continue d'une manière classique sous la commande du contrôleur de station de base BSC dans l'ancienne classe de puissance C4 ou C5 précédant la sélection aux étapes E5 ou E6, comme indiqué à l'étape E10.

Après l'étape E9, si aucune communication n'est en cours ou après rupture d'une communication, le microcontrôleur 2 notifie la nouvelle classe de puissance sélectionnée C5 ou C4 en envoyant au réseau RR un message spécifique, par exemple un message de changement dynamique de classe de puissance CLASS_MARK_CHANGE, ou à défaut en se déconnectant, puis en se connectant au réseau RR et en transmettant l'identificateur de la classe sélectionnée lu dans la mémoire 22 au contrôleur BSC selon un protocole de transmission prédéterminé avec le commutateur MSC. En particulier, l'identificateur de la nouvelle classe est enregistré dans le profil d'abonné contenu notamment dans un enregistreur de localisation des visiteurs VLR (Visitor Location Register) associé au commutateur MSC. Puis en réponse à un acquittement du changement de classe notifié par le commutateur MSC, le microcontrôleur 2 commande également dans le circuit de changement de puissance 8, le changement de l'ancienne classe à la nouvelle classe C5 ou C4 afin de régler convenablement la puissance d'émission dans l'interface radio 3. Le contrôle dynamique de la puissance d'émission du radiotéléphone 1 par le contrôleur BSC s'effectue alors dans la nouvelle classe de puissance d'émission sélectionnée.

Puis si le radiotéléphone n'est pas arrêté à l'étape E12, le procédé revient au menu principal à l'étape E3.

En variante plus complète, lorsque le radiotéléphone 1 est capable de fonctionner dans la classe de puissance élevée C3, l'algorithme du procédé de sélection de puissance ASPm comprend les étapes supplémentaires E13 et E14 relatives à une troisième option proposée à l'usager dans le menu de sélection de puissance à l'étape E4 afin de sélectionner la classe de puissance d'émission élevée C3. Dans cette variante, l'étape E6 est exécutée lorsque l'usager souhaite que le radiotéléphone 1 fonctionne en mains libres mais d'une manière autonome au moyen de la batterie 7, en utilisant le couple d'haut-parleur et microphone 43 et 42, ou HP et MI. Si le radiotéléphone est branché à un adaptateur AD pour véhicule, l'alimentation électrique interne du véhicule prend le relais de la batterie 7 ce qui permet à l'usager de sélectionner la classe C3 à l'étape E13 et d'utiliser le radiotéléphone avec l'adaptateur AD doté du microphone MI, du haut-parleur HP et de l'antenne AN. Après validation de la classe C3, la mémoire 22 du microcontrôleur 2 enregistre l'identificateur de la nouvelle classe C3 à l'étape E14 qui est suivie par l'étape E9.

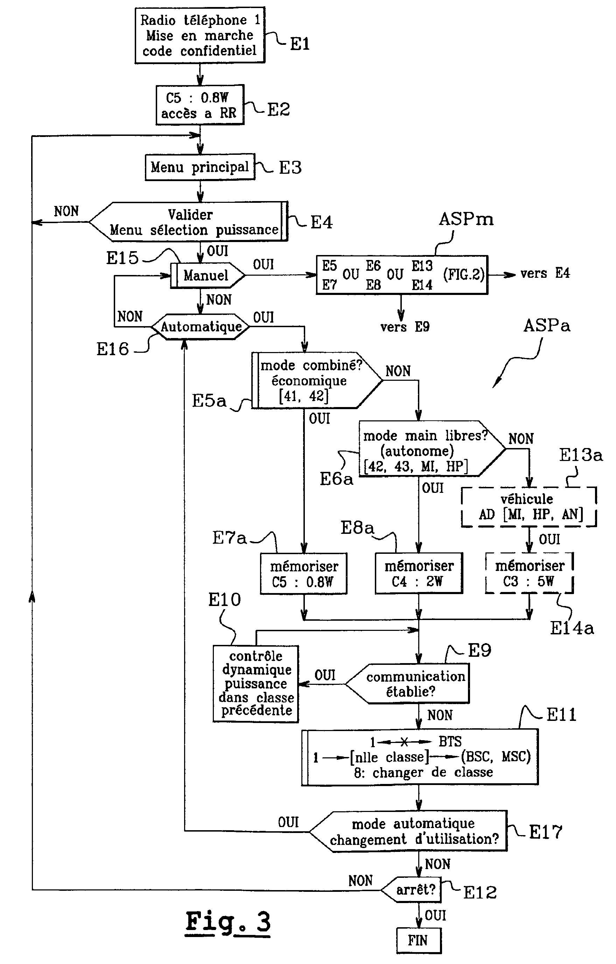

En se référant maintenant à la figure 3, le radiotéléphone 1 comprend un algorithme de sélection de puissance automatique ASPa analogue à l'algorithme de sélection manuelle ASPm dans lequel les étapes E5 à E8 et E13-E14 sont remplacées respectivement par des étapes E5a à E8a et E13a-E14a. Par conséquent selon une première variante, la mémoire 22 du radiotéléphone ne comprend qu'un algorithme de sélection de puissance d'émission automatique avec des étapes E1 à E4, E5a à E8a, E13a, E14a et E9 à E12. Selon une deuxième variante plus complète, la mémoire du radiotéléphone comprend une combinaison des algorithmes ASPm et ASPa montrés à la figure 3 décrite ci-après.

Pour cette variante plus complète, l'algorithme de sélection de puissance présente alors à l'usager sur l'afficheur 51, après l'étape de validation du menu de sélection de puissance à l'étape E4, le choix entre une sélection de puissance manuelle à l'étape E15 ou une sélection de puissance automatique à l'étape E16. Si la sélection de puissance manuelle est choisie à l'étape E15, le procédé est poursuivi par l'exécution de l'algorithme ASPm, c'est-à-dire par une validation à l'une des étapes E5 ou E6 pour un radiotéléphone fonctionnant en classe C4, ou par une sélection de l'une des étapes E5, E6 et E13 pour un radiotéléphone pouvant fonctionner en classe C3.

Si l'usager a choisi la sélection de puissance automatique à l'étape E16, le microcontrôleur 2 décide à travers le circuit de changement de puissance 8 de sélectionner l'une des deux classes C5 ou C4, ou l'une des trois classes C3, C4 et C5 en fonction de la configuration d'utilisation du radiotéléphone 1.

Si le microcontrôleur n'a reçu aucun signal d'utilisation du haut-parleur à écoute amplifiée 43 depuis le clavier 52, ou aucun signal d'utilisation d'un adaptateur AD depuis la prise extérieure 6, le microcontrôleur valide à l'étape E5a le mode combiné avec le haut-parleur 41 et le microphone 42 correspondant à un fonctionnement du radiotéléphone en mode économique et donc au choix de la classe de puissance d'émission faible C5 dont l'identificateur est écrit dans la mémoire 22 à l'étape E7a.

Lorsque le microcontrôleur 2 a reçu un signal d'utilisation en mains libres avec le haut-parleur à écoute amplifiée 43 et le microphone 42 depuis le clavier 52, ou avec le haut-parleur HP et le microphone MI depuis un adaptateur AD à travers la prise 6, le microcontrôleur 2 sélectionne la classe de puissance d'émission intermédiaire C4 à l'étape E6a afin que le radiotéléphone fonctionne avec une puissance maximale nominale de 2 W. L'identificateur de la nouvelle classe de puissance C4 est alors inscrite dans la mémoire 22 à l'étape E8a. Lorsque le radiotéléphone ne peut fonctionner que dans la classe C4, les étapes E13a et E14a sont supprimées, et l'étape E6a est également validée par le microcontrôleur lorsque la prise 6 est branchée à un adaptateur AD avec l'antenne AN pour véhicule.

Lorsque le radiotéléphone est capable de fonctionner dans la classe de puissance d'émission élevée C3, le microcontrôleur 2 sélectionne la classe C3 en réponse à un signal transmis par un adaptateur pour véhicule AD doté d'un microphone MI, d'un haut-parleur HP et d'une antenne AN, à travers la prise 6. La nouvelle classe C3 est écrite dans la mémoire 22 à l'étape E14a.

Puis après l'étape E7a ou E8a pour un radiotéléphone ne pouvant fonctionner qu'en classe C4, ou après l'étape E7a ou E8a ou E14a pour un radiotéléphone pouvant fonctionner dans la classe C3, l'algorithme ASPa est poursuivi par les étapes E9, E10 et E11.

Une étape intermédiaire E17 est prévue entre les étapes E11 et E12 si la sélection automatique de puissance a été choisie à l'étape E16. A l'étape E17, le microcontrôleur 2 surveille périodiquement, ou grâce à un système d'interruptions, par exemple toutes les cinq secondes, si la configuration d'utilisation du radiotéléphone a été modifiée. Par exemple, si le radiotéléphone est passé du mode combiné à l'un des trois modes mains libres ou si un adaptateur AD a été débranché de la prise 6 pour passer d'un mode mains libres au mode combiné, le procédé revient à l'étape E16 qui est poursuivie par l'une des étapes E5a, E6a et E13a si le choix du mode automatique est maintenu sans intervention de l'usager. En revanche, si entre temps l'usager a sélectionné le mode manuel à l'étape E15, l'usager force la poursuite du procédé par l'une des étapes de sélection manuelle E5, ou E6, ou E13.

Bien que l'invention ait été décrite pour un radiotéléphone, celle-ci peut être mise en oeuvre dans tout dispositif radiotéléphonique portable intégrant d'autres fonctionnalités, comme celles d'un organiseur ou assistant numérique personnel PDA pour former un agenda communicant, ou intégré dans un dispositif plus vaste comme un ordinateur personnel portable.

## Revendications

1. Procédé de sélection de puissance d'émission dans un radiotéléphone (1) susceptible de fonctionner dans au moins une deuxième classe (C4) de puissance plus élevée qu'une première classe de faible puissance (C5) dans un réseau de radiotéléphonie (RR), **caractérisé en ce qu'**il comprend les étapes de:
sélectionner (E5, E6 ; E5a, E6a) l'une des première et deuxième classes de puissance (C5, C4) en fonction d'une parmi au moins deux configurations d'utilisation du radiotéléphone indépendamment de tout changement de batterie du radiotéléphone, et
faire fonctionner (E11) le radiotéléphone dans la classe de puissance sélectionnée dès que le radiotéléphone n'est pas en communication.

2. Procédé conforme à la revendication 1, comprenant l'étape de mémoriser (E7, E8 ; E7a, E8a) la classe sélectionnée (C5, C4) tant que le changement de classe n'est pas acquitté par le réseau (RR).

3. Procédé conforme à la revendication 1 ou 2, comprenant une notification de changement dynamique de classe de puissance au réseau (RR), ou à défaut une connexion-déconnexion du radiotéléphone (1) avec le réseau de radiotéléphonie (RR) auquel il est connecté, et une notification (E11) de la classe de puissance sélectionnée par le radiotéléphone (1) à un moyen de contrôle de puissance (BSC, MSC, VLR) dans le réseau de radiotéléphonie (RR), avant de fonctionner dans la classe de puissance sélectionnée.

4. Procédé conforme à l'une quelconque des revendications 1 à 3, selon lequel la première classe de puissance (C5) est sélectionnée pour une utilisation du radiotéléphone en combiné (41, 42), et la deuxième classe de puissance (C4) est sélectionnée pour une utilisation du radiotéléphone en mains libres (42, 43 ; MI, HP ; MI, HP, AN).

5. Procédé conforme à l'une quelconque des revendications 1 à 4, selon lequel le radiotéléphone (1) est susceptible de fonctionner dans une troisième classe (C3) de puissance plus élevée que les première et deuxième classes (C5, C4), **caractérisé en ce que** l'étape de sélectionner (E5, E6, E13 ; E5a, E6a, E13a) consiste à sélectionner la première classe de puissance (C5) lorsque le radiotéléphone est utilisé en combiné (41, 42), la deuxième classe de puissance (C4) lorsque le radiotéléphone est utilisé en mains libres avec un haut-parleur à écoute amplifiée (43) intégré dans le radiotéléphone ou bien avec un adaptateur pour piéton (AD) branché au radiotéléphone et muni d'un microphone (MI) et d'un haut-parleur (HP), et la troisième classe de puissance (C3) lorsque le radiotéléphone est utilisé en mains libres avec un adaptateur (AD) notamment pour véhicule, muni d'un microphone (MI), d'un haut-parleur (HP) et d'une antenne (AN).

6. Procédé conforme à l'une quelconque des revendications 1 à 5, selon lequel l'étape de sélectionner (E5, E6, E13) est effectuée manuellement (E15) en validant l'une des classes (C5, C4, C3) dans le radiotéléphone.

7. Procédé conforme à l'une quelconque des revendications 1 à 5, selon lequel l'étape de sélectionner (E5a, E6a, E13a) est exécutée automatiquement (E16) dans le radiotéléphone en fonction de la configuration d'utilisation de celui-ci.

8. Procédé conforme aux revendications 6 et 7, comprenant une étape de sélectionner manuellement entre un mode manuel de sélection de classe de puissance et un mode automatique de sélection de classe de puissance (E15, E16).

9. Radiotéléphone susceptible de fonctionner dans au moins une deuxième classe (C4) de puissance plus élevée qu'une première classe de faible puissance (C5) dans un réseau de radiotéléphonie (RR), **caractérisé en ce qu'**il comprend un moyen (2, 8, 3) pour commander un fonctionnement du radiotéléphone sélectivement dans l'une de plusieurs classes de puissance d'émission (C5, C4, C3) en fonction respectivement de plusieurs configurations d'utilisation du radiotéléphone indépendamment de tout changement de batterie du radiotéléphone, dès que le radiotéléphone n'est pas en communication.

10. Radiotéléphone conforme à la revendication 9, dans lequel le moyen pour commander (2, 8, 3) commande le fonctionnement du radiotéléphone (1) dans une première classe de faible puissance en réponse à un signal d'un moyen (52) dans le radiotéléphone indiquant une utilisation en combiné (41, 42), et dans une deuxième classe de puissance plus élevée (C4) en réponse à un signal transmis à travers une prise extérieure (6) du radiotéléphone par un adaptateur doté au moins d'un microphone (MI) et d'un haut-parleur (HP) pour une utilisation en mains libres.

11. Radiotéléphone conforme à la revendication 10, dans lequel le moyen pour commander (2, 8, 3) commande le fonctionnement du radiotéléphone (1) dans une troisième classe de puissance (C3) plus élevée que les première et deuxième classes (C5, C4) en réponse à un signal transmis à travers la prise extérieure (6) par un adaptateur (AD) doté d'un microphone (MI), d'un haut-parleur (HP) et d'une antenne (AN) pour une utilisation en mains libres notamment dans un véhicule.

## Claims

1. A method for selecting a transmitting power in a radiotelephone (1) capable of operating in at least one second class (C4) of power higher than a first class of low power (C5) in a radiotelephone network (RR), **characterised in that** it comprises the steps of:
selecting (E5, E6; E5a, E6a) one of the first and second classes of power (C5, C4) according to one of at least two configurations of use of the radiotelephone regardless of any replacement of battery of the radiotelephone, and
operating (E11) the radiotelephone in the selected class of power as soon as the radiotelephone is not communicating.

2. The method according to claim 1, comprising the step of storing (E7, E8; E7a, E8a) the selected class (C5, C4) as long as the change of class is not effected by the network (RR).

3. The method according to claim 1 or 2, comprising notifying to the network (RR) a dynamic change of the class of power, or otherwise connecting-disconnecting the radiotelephone (1) with the radiotelephone network (RR) to which it is connected, and notifying (E11) to a power controlling means (BSC, MSC, VLR) in the radiotelephone network (RR) the class of power selected by the radiotelephone (1), before operating in the selected class of power.

4. The method according to any of claims 1 to 3, wherein the first class of power (C5) is selected for using the radiotelephone as a handset (41, 42), and the second class of power (C4) is selected for using the radiotelephone as a hand-free telephone (42, 43; MI, HP; MI, HP, AN).

5. The method according to any of claims 1 to 4, wherein the radiotelephone (1) is able to operate in a third class (C3) of power higher than the first and second classes (C5, C4), **characterised in that** the step of selecting (E5, E6, E13; E5a, E6a, E13a) to select the first class of power (C5) when the radiotelephone is used as a handset (41, 42), the second class of power (C4) when the radiotelephone is used as a hand-free telephone with an enhanced listening loud-speaker (43) embedded in the radiotelephone or with a pedestrian adaptor (AD) connected to the radiotelephone and provided with a microphone (MI) and a loud-speaker (HP), and the third class of power (C3) when the radiotelephone is used as a hand-free telephone with an adaptor (AD), in particular for a vehicle, provided with a microphone (MI), a loud-speaker (HP) and an antenna (AN).

6. The method according to any of claims 1 to 5, wherein the step of selecting (E5, E6, E13) is performed manually (E15) by validating one of the classes (C5, C4, C3) in the radiotelephone.

7. The method according to any of claims 1 to 5, wherein the step of selecting (E5a, E6a, E13a) is performed automatically (E16) in the radiotelephone depending on the configuration of use thereof.

8. The method according to claims 6 and 7, comprising a step of manually selecting between a manual mode for selecting the class of power and an automatic mode for selecting the class of power (E15, E16).

9. A radiotelephone capable of operating at least a second class (C4) of power higher than a first class of low power (C5) in a radiotelephone network (RR), **characterised in that** it comprises means (2, 8, 3) for controlling an operation of the radiotelephone selectively in one of the plurality of classes of transmitting power (C5, C4, C3) depending respectively on a plurality of configurations of use for the radiotelephone regardless of any replacement of battery of the radiotelephone, as soon as the radiotelephone is not communicating.

10. The radiotelephone according to claim 9, wherein the controlling means (2, 8, 3) controls the operation of the radiotelephone (1) in a first class of low power responsive to a signal from a means (52) in the radiotelephone indicative of a use as an handset (41, 42), and in a second class of higher power (C4) responsive to a signal transmitted through an outside port (6) of the radiotelephone by an adaptor provided with at least a microphone (MI) and a loud-speaker (HP) for being used as a hand-free telephone.

11. The radiotelephone according to claim 10, wherein the controlling means (2, 8, 3) controls the operation of the radiotelephone (1) in a third class of power (C3) higher than the first and second classes (C5, C4) responsive to a signal transmitted through the outside port (6) by an adaptor (AD) provided with a microphone (MI), a loud-speaker (HP) and an antenna (AN) for being used as an hand-free telephone, in particular in a vehicle.

## Patentansprüche

1. Verfahren zum Auswählen der Sendeleistung in einem Funktelefon (1), das in einem Funktelefonnetz (RR) in mindestens einer zweiten Leistungsklasse (C4) funktionieren kann, die höher ist als eine erste schwache Leistungsklasse (C5), **dadurch gekennzeichnet, dass** das Verfahren folgende Schritte umfasst:
Auswählen (E5, E6; E5a, E6a) einer der ersten und zweiten Leistungsklassen (C5, C4) je nach einer von mindestens zwei Verwendungskonfigurationen des Funktelefons, unabhängig von einem Batteriewechsel des Funktelefons, und
Betätigen (E11) des Funktelefons in der gewählten Leistungsklasse, sobald das Funktelefon nicht verbunden ist.

2. Verfahren nach Anspruch 1, umfassend den Schritt des Speicherns (E7, E8; E7a, E8a) der gewählten Klasse (C5, C4), solange der Klassenwechsel nicht vom Netz (RR) quittiert wurde.

3. Verfahren nach Anspruch 1 oder 2, umfassend eine Meldung eines dynamischen Leistungsklassenwechsels an das Netz (RR), oder ansonsten ein Anschließen/Abschalten des Funktelefons (1). an das/von dem Funktelefonnetz (RR), an das es angeschlossen ist, und eine Meldung (E11) der von dem Funktelefon (1) gewählten Leistungsklasse an ein Leistungssteuermittel (BSC, MSC, VLR) in dem Funktelefonnetz (RR) vor dem Betrieb in der gewählten Leistungsklasse.

4. Verfahren nach einem der Ansprüche 1 bis 3, wobei die erste Leistungsklasse (C5) für eine Verwendung des Funktelefons als Handapparat (41, 42) und die zweite Leistungsklasse (C4) für eine Verwendung des Funktelefons als Freisprechanlage (42, 43; MI, HP; MI, HP, AN) gewählt wird.

5. Verfahren nach einem der Ansprüche 1 bis 4, wobei das Funktelefon (1) in einer dritten Leistungsklasse (C3) funktionieren kann, die höher ist als die erste und zweite Klasse (C5, C4), **dadurch gekennzeichnet, dass** der Schritt des Auswählens (E5, E6, E13; E5a, E6a, E13a) darin besteht, die erste Leistungsklasse (C5) zu wählen, wenn das Funktelefon als Handapparat (41, 42) verwendet wird, die zweite Leistungsklasse (C4) zu wählen, wenn das Funktelefon als Freisprechanlage mit einem Lauthörlautsprecher (43), der in das Funktelefon integriert ist, oder aber mit einem Fußgängerkit (AD), das an das Funktelefon angeschlossen wird und mit einem Mikrofon (MI) und einem Lautsprecher (HP) ausgestattet ist, verwendet wird, und die dritte Leistungsklasse (C3) zu wählen, wenn das Funktelefon als Freisprechanlage mit einem Adapter (AD), insbesondere für Fahrzeuge, der mit einem Mikrofon (MI), einem Lautsprecher (HP) und einer Antenne (AN) ausgestattet ist, verwendet wird.

6. Verfahren nach einem der Ansprüche 1 bis 5, wobei der Schritt des Auswählens (E5, E6, E13) manuell (E15) ausgeführt wird, indem eine der Klassen (C5, C4, C3) im Funktelefon gültig gemacht wird.

7. Verfahren nach einem der Ansprüche 1 bis 5, wobei der Schritt des Auswählens (E5a, E6a, E13a) im Funktelefon je nach seiner Verwendungskonfiguration automatisch (E16) ausgeführt wird.

8. Verfahren nach Anspruch 6 und 7, umfassend einen Schritt des manuellen Auswählens zwischen einem manuellen Leistungsklassenauswahlmodus und einem automatischen Leistungsklassenauswahlmodus (E15, E16).

9. Funktelefon, das in einem Funktelefonnetz (RR) in mindestens einer zweiten Leistungsklasse (C4) funktionieren kann, die höher ist als eine erste schwache Leistungsklasse (C5), **dadurch gekennzeichnet, dass** es ein Mittel (2, 8, 3) umfasst, um einen Betrieb des Funktelefons wahlweise in einer der mehreren Sendeleistungsklassen (C5, C4, C3), jeweils nach mehreren Verwendungskonfigurationen des Funktelefons unabhängig von einem Batteriewechsel des Funktelefons, sobald das Funktelefon nicht verbunden ist, zu steuern.

10. Funktelefon nach Anspruch 9, wobei das Steuermittel (2, 8, 3) den Betrieb des Funktelefons (1) in einer ersten schwachen Leistungsklasse als Reaktion auf ein Signal eines Mittels (52) in dem Funktelefon steuert, das eine Verwendung als Handapparat (41, 42) angibt, und in einer zweiten höheren Leistungsklasse (C4) als Reaktion auf ein Signal, das über einen Außenanschluss (6) des Funktelefons durch einen Adapter übertragen wird, der mindestens mit einem Mikrofon (MI) und einem Lautsprecher (HP) für eine Verwendung als Freisprechanlage versehen ist, steuert.

11. Funktelefon nach Anspruch 10, wobei das Steuermittel (2, 8, 3) den Betrieb des Funktelefons (1) in einer dritten Leistungsklasse (C3) steuert, die höher ist als die erste und zweite Klasse (C5, C4) als Reaktion auf ein Signal, das über den Außenanschluss (6) von einem Adapter (AD) übertragen wird, der mit einem Mikrofon (MI), einem Lautsprecher (HP) und einer Antenne (AN) für eine Verwendung als Freisprechanlage, insbesondere in einem Fahrzeug, versehen ist.
